# EUROPEAN PATENT APPLICATION

(11) **EP 3 941 037 A1**
(43) Date of publication of application: **19.01.2022**
(21) Application number: 20911151.7
(22) Date of filing: 13.11.2020
(51) Int. Cl.: H04N 7/14, H04N 5/76, G06T 11/60, G06F 16/74, H04N 21/433, H04N 21/854

(54) **EDITING TEMPLATE GENERATING METHOD AND APPARATUS, ELECTRONIC DEVICE, AND STORAGE MEDIUM**

(30) Priority: 02.01.2020 CN 202010003242
(71) Applicant: Beijing Dajia Internet Information Technology Co., Ltd., Beijing 100085 (CN)
(72) Inventor: HUANG, Weibin, Beijing 100085 (CN)
(74) Representative: Yang, Shu
(86) International application number: PCT/CN2020/128702
(87) International publication number: WO 2021/135678

(57) **Abstract**

The present disclosure relates to the technical field of multimedia, and relates to an editing template generating method and an electronic device. The method comprises: obtaining editing information of a target multimedia resource in response to a template generation request for the target multimedia resource, the editing information comprising at least one of editing operation information or editing material information used for editing; selecting the editing information corresponding to a target type as template data; and generating an editing template according to the template data.

## Description

### CROSS-REFERENCE TO RELATED APPLICATION

This application claims priority to Chinese Patent Application No. 202010003242.1, filed on January 02, 2020 and entitled "EDITING TEMPLATE GENERATION METHOD AND DEVICE, EQUIPMENT AND STORAGE MEDIUM," the disclosure of which is incorporated herein by reference in its entirety.

### TECHNICAL FIELD

The present disclosure relates to the field of multimedia technologies, and in particular, relates to a method for generating a clipping template, and an electronic device.

### BACKGROUND

With the development of the multimedia technologies, people often produce multimedia resources by clipping multimedia resources to obtain better audio-visual effects.

Generally, clipping a multimedia resource usually requires high technical skills. Therefore, some applications that provide clipping functions for multimedia resources have been developed, which provide clipping templates for users, such that an ordinary user who is unskilled in clipping technology can easily call the clipping templates to clip a multimedia resource. However, the clipping templates provided by the applications are usually fixed templates, which can hardly meet personalized clipping demands of users.

### SUMMARY

The present disclosure provides a method for generating a clipping template, and an electronic device. The technical solutions of the present disclosure are as follows.

According to a first aspect of embodiments of the present disclosure, a method for generating a clipping template is provided. The clipping template is configured to clip a multimedia resource. The method includes:
acquiring clipping information of a target multimedia resource in response to a template generation request for the target multimedia resource, wherein the clipping information includes at least one of clip operation information or clipping material information for clipping;
selecting the clipping information conforming to a target type as template data; and
generating the clipping template based on the template data.

According to a second aspect of embodiments of the present disclosure, an apparatus for generating a clipping template is provided. The clipping template is configured to clip a multimedia resource. The apparatus includes:
an acquiring module, configured to acquire clipping information of a target multimedia resource in response to a template generation request for the target multimedia resource, wherein the clipping information includes at least one of clip operation information or clipping material information for clipping;
a selecting module, configured to select the clipping information conforming to a target type as template data; and
a generating module, configured to generate the clipping template based on the template data.

According to a third aspect of embodiments of the present disclosure, an electronic device is provided. The electronic device includes:
one or more processors; and
one or more memories configured to store one or more instructions executable by the one or more processors;
wherein the one or more processors, when loading and executing the one or more instructions, are caused to: acquire clipping information of a target multimedia resource in response to a template generation request for the target multimedia resource, wherein the clipping information includes at least one of clip operation information or clipping material information for clipping; select the clipping information conforming to a target type as template data; and generate a clipping template based on the template data, wherein the clipping template is configured to clip a multimedia resource.

According to a fourth aspect of embodiments of the present disclosure, a storage medium storing one or more instructions therein is provided, wherein the one or more instructions, when loaded and executed by a processor of an electronic device, cause the electronic device to: acquire clipping information of a target multimedia resource in response to a template generation request for the target multimedia resource, wherein the clipping information includes at least one of clip operation information or clipping material information for clipping; select the clipping information conforming to a target type as template data; and generate a clipping template based on the template data, wherein the clipping template is configured to clip a multimedia resource.

According to a fifth aspect of embodiments of the present disclosure, a computer program product including one or more instructions is provided. The one or more instructions, when loaded and executed by a processor of an electronic device, cause the electronic device to: acquire clipping information of a target multimedia resource in response to a template generation request for the target multimedia resource, wherein the clipping information includes at least one of clip operation information or clipping material information for clipping; select the clipping information conforming to a target type as template data; and generate a clipping template based on the template data, wherein the clipping template is configured to clip a multimedia resource.

It should be understood that the above general description and the detailed description in the following text are only exemplary and explanatory, and should not be construed as a limitation to the present disclosure.

### BRIEF DESCRIPTION OF THE DRAWINGS

The accompanying drawings, which are incorporated in and constitute a part of this description, illustrate embodiments of the present disclosure and together with the description, serve to explain the principles of the present disclosure, and do not constitute an improper limitation of the present disclosure.
FIG. 1 shows an implementation environment of a method for generating a clipping template according to an exemplary embodiment;
FIG. 2 is a flowchart of a method for generating a clipping template according to an exemplary embodiment;
FIG. 3 is a schematic diagram of a terminal interface according to an exemplary embodiment;
FIG. 4 is a schematic structural diagram of an apparatus for generating a clipping template according to an exemplary embodiment;
FIG. 5 is a structural block diagram of a terminal according to an exemplary embodiment; and
FIG. 6 is a schematic structural diagram of a server according to an exemplary embodiment.

### DETAILED DESCRIPTION

For better understanding of the technical solutions of the present disclosure by those of ordinary skill in the art, the technical solutions in the embodiments of the present disclosure are clearly and completely described in the following with reference to the accompanying drawings.

It should be noted that the terms "first," "second," and the like in the description, claims and accompanying drawings of the present disclosure are intended to distinguish between similar objects but do not necessarily indicate a specific order or sequence. It should be understood that data used in such a way can be exchanged under proper conditions to make it possible to implement the described embodiments of present disclosure in sequences except those illustrated or described herein. The embodiments and practice thereof described herein do not represent all embodiments and practice consistent with the present disclosure. On the contrary, these embodiments and practice are merely embodiments of an apparatus and a method detailed in the appended claims and consistent with some aspects of the present disclosure.

User information involved in the present disclosure may be information authorized by a user or fully authorized by various parties.

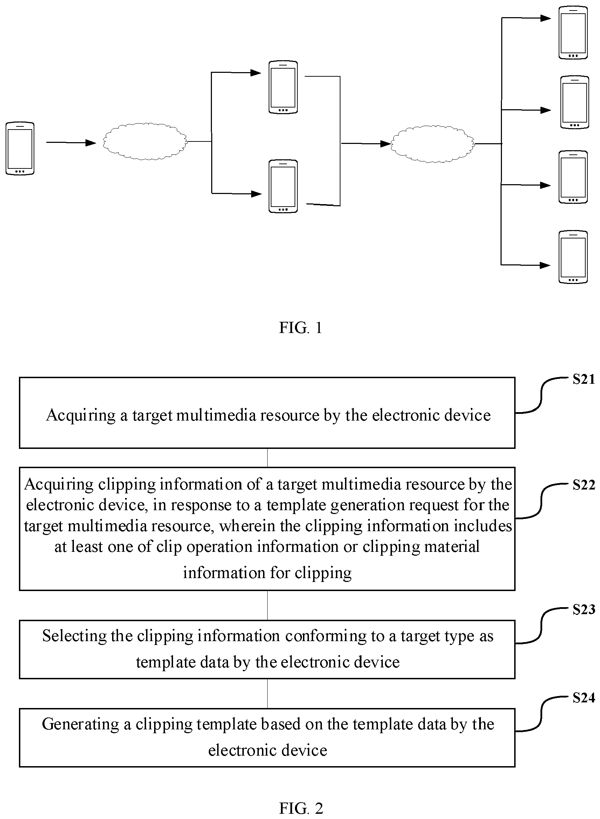

FIG. 1 shows an implementation environment of a method for generating a clipping template according to an exemplary embodiment. As shown in FIG. 1, the implementation environment involves a plurality of electronic devices. The electronic device is a terminal or a server. In FIG. 1, the case where the electronic device is taken as the terminal is used as an example for illustration.

Referring to FIG. 1, the method for generating the clipping template is applicable to an electronic device. In response to generating a clipping template, the electronic device sends the clipping template to other electronic devices through cloud, to share and disseminate the clipping template. The other electronic devices can send the clipping template to more electronic devices through the cloud. The other electronic devices are also capable of performing the method for generating the clipping template, to generate a clipping template.

In an embodiment of the present disclosure, a method for generating a clipping template is provided. The method for generating the clipping template is configured to generate a clipping template based on a target multimedia resource. In the generating process, the clipping template can be generated based on clipping information of the target multimedia resource. FIG. 2 is a flowchart of a method for generating a clipping template according to an exemplary embodiment. Referring to FIG. 2, the method for generating the clipping template is applicable to an electronic device and includes the following processes.

In S21, the electronic device acquires a target multimedia resource.

In the embodiments of the present disclosure, the electronic device acquires a target multimedia resource, wherein the target multimedia resource is a clipped multimedia resource. The electronic device generates a clipping template based on clipping information of the target multimedia resource, to acquire the clipping template similar to the clipping situation of the target multimedia resource. In this way, the clipping template can be directly used to generate a new multimedia resource subsequently.

The target multimedia resource is acquired by clipping on the electronic device, or acquired by receiving a clipped target multimedia resource from another electronic device, or acquired by downloading from a target address by the electronic device. A specific source of the target multimedia resource is not limited in the embodiments of the present disclosure.

For example, the target multimedia resource being a video is taken as an example. In the case that the video is clipped by a user and the user is satisfied with a playback effect of the video, a clipping template is generated based on the video, and subsequently, a video having the same or similar clipping effect can be acquired quickly and efficiently based on the clipping template. In another example, in the case that the user likes a video clipped by another user, and a clipping template is generated based on the video, and a video clipped by the user can by acquired based on the clipping template, such that a video production need of the user is met, a user's personalized clipping need is met, and clipping efficiency is improved.

In S21, the electronic device acquires the target multimedia resource and displays the target multimedia resource. Thus, the user may want to generated a clipping template similar to the clipping situation of the target multimedia resource upon seeing the display effect. In this way, a new multimedia resource can be quickly generated with the clipping template, which is convenient and quick. The clipping situation of the new multimedia resource is similar to the clipping situation of the target multimedia resource. Moreover, the clipping template can be generated only based on the clipped target multimedia resource and without a technician, such that a clipping template conforming to a clipping habit of the user can be generated. In addition, the clipping template is not fixed and is flexible and variable in form.

In some embodiments, the user operations and the process for generating the template can be performed on the same device or different devices. For example, in the case that the user operations and the process for generating the template are performed on the same device, and the user wants to generate the clipping template upon seeing the target multimedia resource, a template generation operation is performed. For example, the target multimedia resource is selected, and a trigger operation is performed on the template generation control, to trigger a template generation request for the target multimedia resource. The electronic device directly responds to the template generation request to perform the following processes. In the case that the user operations and the process for generating the template are performed on different devices, the user performs the template generation operation on another device, triggers a template generation request, and sends the template generation request to the electronic device. Thus, the electronic device performs S21, and performs the following processes in response to the template generation request. The way adopted is not limited in the embodiments of the present disclosure.

In S22, the electronic device acquires clipping information of a target multimedia resource in response to a template generation request for the target multimedia resource, wherein the clipping information includes at least one of clip operation information or clipping material information for clipping.

For the received template generation request, the electronic device generates a template in response to the template generation request. The electronic device acquires the clipping information of the target multimedia resource, and takes the clipping information as data base for generating the clipping template. The clipping information includes at least one of clip operation information or clipping material information for clipping. That is, during the process of clipping a multimedia resource, some attributes of the multimedia resource may be modified by a clip operation, and some materials may be added to the multimedia resource, such that the target multimedia resource can be acquired by combining a material and the multimedia resource.

In some embodiments, the clip operation information may include information of at least one of adjusting a picture frame, adjusting a video ratio, scaling the frame, moving the frame, changing speed, reversing, rotating, changing sound, changing volume, adding a transition, adding a filter, adding music, adding a sound effect, adding dubbing, adding a subtitle, adding a sticker, adding a cover, and the like. The clip operation information may further include information of other clip operations, which are not enumerated herein. The clipping material information for clipping may include information of at least one of a filter, music, a sound effect, a sticker, and a cover. The clipping material information for clipping may further include other clipping material information, which is not enumerated herein.

The clip operation information at least includes an operation type and operation content of at least one clip operation. The operation type may include, but is not limited to, adjusting a picture frame, adjusting a video ratio, scaling the frame, moving the frame, changing speed, reversing, rotating, changing sound, changing volume, adding a transition, adding a filter, adding music, adding a sound effect, adding dubbing, adding a subtitle, adding a sticker, adding a cover, and the like. The operation content may include adjusting the picture frame, and the operation content is adjusting a size of the picture frame. It is only an exemplary description and not limited to the present disclosure. In other embodiments, an operation sequence of clip operations is different, and thus, final clipping effects of the multimedia resource can be different. The clip operation information further includes an operation sequence of a plurality of clip operations. For example, the user performs multiple types of clip operations (such as reducing a frame in a first operation, enlarging the frame in a second operation, and reducing the frame in a third operation), and the electronic device records the operation sequence of the clip operations.

With respect to the clipping material information, the clipping material information for clipping includes a material type, material content, or a material acquisition manner of at least one material, wherein the material type may include filter, music, sound effect, sticker, cover, and the like. The material type may include other material types, which are not enumerated herein. The material content is the material itself for clipping. For example, an audio file, a configuration file corresponding to a sound effect, a sticker, or a picture corresponding to a cover. The material acquisition manner includes an acquisition address of the material. For example, the material content is stored in the acquisition address, and the material content can be directly acquired from the acquisition address.

In S22, the electronic device acquires the clipping information in a plurality of manners. In some embodiments, the clipping information is information recorded in the clipping process. The information recorded in the clipping process is stored in a clip operation log. Therefore, the clipping information can be extracted from the clip operation log. In some other embodiments, the clipping information is information acquired by performing comparison analysis on the target multimedia resource and an original multimedia resource. The manner adopted is not limited in the embodiments of the present disclosure. In some embodiments, two manners are provided below.

In the first manner, the electronic device acquires the clip operation log of the target multimedia resource, and extracts clipping information for clipping the target multimedia resource from the clip operation log. Because the clipping information can include different information, the first manner can include the following cases. In some embodiments, the clipping information may at least include the clip operation information, and the electronic device extracts the clip operation information for clipping the target multimedia resource from the clip operation log, wherein the clip operation information describes all clip operations for acquiring the target multimedia resource by clipping or a final clip operation result.

After the clip operation log is acquired, by taking the clip operation information in the log as data base for generating the clipping template, the clipping template can indicate an actual clipping process of the target multimedia resource. By clipping the multimedia resource based on the clipping template generated in this way, the multimedia resource is clipped with similar or same clipping processes. The display effect of the acquired new multimedia resource is similar to the display effect of the target multimedia resource. The clipping process is accurate, and the acquired clipping template more conforms to clipping habits of the user, thereby better meeting the need of the user.

In some other embodiments, the clipping information may further include the clipping material information for clipping. The electronic device further extracts clipping material information for clipping the target multimedia resource from the clip operation log, wherein the clipping material information at least includes a material type, material content, or a material acquisition manner of at least one material.

After the clip operation log is acquired, by taking the information in the clip operation log as the data base for generating the clipping template, the clipping template that conforms to the clipping habits of the user and better meets the need of the user can be generated. Both the clip operation information and the clipping material information are acquired from the clip operation log, such that the generated clipping templates are rich and diverse, flexible and changeable in form. Convenience is provided for both the clip operation and material, the user operations are simplified, and a generation effect and practicability of the clipping template are improved.

In the first manner, in the case that the user clips the multimedia resource, the electronic device records the clip operation information of the user or the used material information, and stores the information in the clip operation log. In the case that the target multimedia resource is acquired by clipping, the clip operation log can be taken as a history clipping path of the target multimedia resource. The process of acquiring the target multimedia resource by clipping can be clearly known through the clip operation log.

In some embodiments, the clip operation log further includes various cases. In a first case, a clipping record includes clip operation information or used material information of each clip operation performed by the user. In a second case, the clip operations performed by the user are selected to acquire the clip operation information or the used material information, such that the clip operation information or the used material information can indicate a final clipping effect of the target multimedia resource. For example, in the second case, operation content of the clip operations with different operation types are combined by the electronic device, to acquire information of the selected clip operations. For example, in the first case, the clipping record can record multiple operations of the user, and the final clipping result can be a final result acquired by performing multiple operations. For instance, the user can reduce the frame once and enlarge the frame once, and the final clipping result is that the frame is enlarged. In the second case, the clipping record can directly record the operation type of reducing/enlarging the frame, and the operation content is a specific scale in enlarging of the frame.

In a second manner, the electronic device acquires an original multimedia resource before the target multimedia resource is clipped, and acquires clipping information of the target multimedia resource by comparing and analyzing the original multimedia resource and the target multimedia resource.

The electronic device can directly compare and analyze the target multimedia resource and the original multimedia resource. In the case that there is a difference between the two resources, how to transform from the original multimedia resource to the target multimedia resource can be analyzed, and the transformation process is the clipping information. Because the clipping information can be acquired by comparing and analyzing the two multimedia resources, it is unnecessary to record the clipping processes one by one, and the final clipping effect of the target multimedia resource can be directly acquired based on the comparison analysis. By generating the clipping template based on such clipping information, the generation process can be completed quickly and efficiently, and the generated clipping template can indicate the final clipping effect of the target multimedia resource, and conforms to the clipping habits of the user or needs of the user, and improves the generation efficiency.

In the case that the multimedia resource is a video, the electronic device can further compare the target multimedia resource and the original multimedia resource frame by frame. In the case that there is a difference between any frame of the target multimedia resource and the original multimedia resource, at least one of clip operation information or used material information needed to transform from the frame of the original multimedia resource to the frame of the target multimedia resource is acquired.

In S23, the electronic device selects the clipping information conforming to a target type as template data.

Generally, the generated clipping template is directly configured to clip the multimedia resource based on the clipping template. And it is unnecessary to repeat the same clip operation. The clip operations or materials included in the clipping information may not be universal. Thus, the non-universal clipping information may not be used as required content to generate the clipping template. The universal clipping information is repeatedly used to generate the clipping template, thereby effectively improving the utilization rate and practicability of the generated clipping template.

Whether the clipping information is universal can be determined by relevant technicians based on requirements. That is, the target type is determined, and quantity of the target type is one or more. In S23, the electronic device may perform different processes regarding the different information that may be included in the clipping information.

In the case that the clipping information of the target multimedia resource at least includes the clip operation information, the target type at least includes a predetermined target operation type. Accordingly, in S23, the electronic device selects the clip operation information conforming to the target operation type from the clip operation information as the template data. The clip operation information of the target operation type is universal, and the subsequently generated template data can indicate the universal clip operation process in the clipping process of the target multimedia resource. Thus, this not only conforms to the clipping habits of the user, but also meets the needs of the user. In addition, special clipping of a single multimedia resource by the user can be eliminated, and the acquired clipping template is relatively practical and applicable.

In the case that the clipping information of the target multimedia resource further includes an operation sequence of a plurality of clip operations, in S23, the electronic device correlates the clip operation information conforming to the target operation type based on the operation sequence as the template data. In this way, the operation sequence corresponding to the clip operation information in the template data is clear. The clipping template is generated based on the template data. In the case that the clipping template is used, a multimedia resource can be processed based on such operation sequence, such that the operation sequence of clipping is same as the operation sequence of clipping the target multimedia resource. It can be ensured that the clipping method to generate a new multimedia resource is similar to or the same as the clipping method to generate the target multimedia resource, thereby better conforming to the clipping habits of the user. That is, the template data is more accurate, and the generated clipping template more conforms to expectations of the user.

In the case that the clipping information of the target multimedia resource at least includes the clipping material information for clipping, the target type at least includes a predetermined target material type, wherein the target material type is a universal material type. In S23, the electronic device selects clipping material information conforming to the target material type from the clipping material information as the template data. In this case, the clipping information includes the clipping material information. Thus, universal clipping material information is selected from the clipping information and taken as the template data. A clipping template is generated subsequently, and specifies how to clip the material. Therefore, the new multimedia resource generated based on the clipping template can be the same as or similar to the target multimedia resource in terms of material. In this way, the clipping template conforms to the clipping habits of the user in terms of the material, or personalized clipping requirements of the user. The template data can be selected automatically to generate the clipping template, thereby effectively improving the generation efficiency of the clipping template.

Both the clip operation information and the clipping material information have been described above. In some embodiments, the clipping information includes the clip operation information or the clipping material information, or includes both the clip operation information and the clipping material information, which is not limited in the embodiments of the present disclosure.

In S24, the electronic device generates a clipping template based on the template data.

In response to acquiring the template data by selecting the clipping information, the electronic device generates the clipping template. It can be known from the above process that the information included in the template data can be different. In the case that the included information is different, the generation process may be different.

In some embodiments, the template data includes the clip operation information conforming to the predetermined target operation type. In this case, the generation process may be as follows: the electronic device generates a corresponding clip operation option based on the clip operation information and acquires the clipping template including the clip operation option. The clip operation option indicates the clip operation. For example, the clip operation information of enlarging a frame includes enlarging the frame and a magnification,such that the clip operation option of enlarging the frame can be generated and used as a part of the clipping template.

By performing the above process, the clipping template includes at least one clip operation option. How to clip the multimedia resource can be known based on the clip operation option, and the template data using in the generation process is selected based on the clipping information of the target multimedia resource. The clip operation option in the generated clipping template is the same as the clipping method of acquiring the target multimedia resource by clipping. Therefore, the clipping template conforming to the clipping habits of the users and personalized can be generated, without manual processing, thereby improving the generation efficiency of the clipping template, and further improving the efficiency of clipping the multimedia resource.

In the case that the clip operation information further includes an operation sequence of the at least one clip operation, the acquired clip operation information conforming to the predetermined target operation type in the template data is correlated based on the operation sequence of a plurality of clip operations. Accordingly, the generation process may be as follows: the electronic device acquires the clipping template including clip operation options and a trigger sequence of the clip operation options by generating corresponding clip operation options and the trigger sequence based on a correlation relationship of the clip operation information conforming to the predetermined target operation type.

The clip operation options are generated based on the clip operation information, and a trigger sequence of the clip operation options corresponds to the clipping sequence of the target multimedia resource. Therefore, the clipping template can clearly indicate the clip operations conforming to the target operation type and the corresponding sequence of the clip operations. The clipping template is accurate and fits the actual clipping situation of the target multimedia resource. Therefore, the clipping template more conforms to expectations and clipping habits of the user, and is more practical. The new multimedia resource generated based on the clipping template is closer to the target multimedia resource, and the clipping result is more accurate.

In some embodiments, the template data includes the clipping material information conforming to the predetermined target material type. For the clipping material information, the generation process may be as follows: the electronic device generates a corresponding material option based on the clipping material information and acquires the clipping template including the material option. The clipping material information is converted into a material option in the clipping template. The material option can clearly indicate material information used in clipping the target multimedia resource. The clipping of the material is the same as the clipping of the material done by the user before. Therefore, the generated clipping template more conforms to the clipping habits of the user, and a clipping result acquired based on this clipping template is more accurate. Thus, a generating effect of the clipping template is better.

In some embodiments, the clipping material information for clipping includes a material type, material content, or a material acquisition manner of at least one material. The generation process of the material option and the generation process of the clipping template may be as follows: the electronic device generates a material acquisition path associated with the corresponding material option based on a material type and a material acquisition manner in the clipping material information, and acquires the clipping template including the material option by adding material content to a directory indicated by the material acquisition path based on the material content in the clipping material information.

Attributes of the material option are generated based on information in the clipping material information. Based on the material option, the material content can be accurately acquired from a corresponding position, such that clipping can be performed based on the material content. The clipping template including the material option is rich in content and flexible in form, and complex clipping can be performed with the generated clipping template based on the material option. The generated clipping template is high in practicability and good in clipping effect. In this way, a new multimedia resource can be generated by using the same material based on the clipping template. The new multimedia resource is similar to the target multimedia resource. Thus, it is easier to meet user's expectations.

In some embodiments, the clipping template is stored as description information. The description information includes description information of the clip operation, or includes description information of the used material, or includes description information of the clip operation and description information of the used material.

The following provides an example: the clip operation information and clipping material information are called codes. The user clips a video, cuts 0-5 seconds of the video (coded as operation A), adds a superimposing-black transition at the beginning of the video (coded as operation B), adds a piece of light-style music (coded as material a), adds a "clear" filter (coded as material b), adds dubbing commentaries in 0-5 seconds (coded as material c), and then complete the clipping. A program records and stores user operations AB and the used materials abc. The operations AB are scanned. In the case that the operation A is non-universal and the operation B is universal, the operation B is extracted. The materials abc are scanned. In the case that the material c is non-universal and the materials ab are universal, the materials ab are extracted. A template is generated based on the operation B and the materials ab.

In response to generating the clipping template in S24, the electronic device may further display the generated clipping template. In some embodiments, the electronic device provides a template display interface to display the clipping template. The user can see the displayed clipping template, wherein the clipping template includes at least one of a clip operation option or a material option. In the case that the user wants to preview a clipping effect, the user can perform a preview operation on the clipping template. In this way, the electronic device can receive a preview operation instruction performed on the clipping template, and determine a template option corresponding to an operation position of the preview operation instruction in response to the preview operation instruction. The template option at least includes one of the clip operation option or the clipping material option. Further, the electronic device can display preview content of the template option based on template data corresponding to the template option.

By previewing and displaying the clipping template, the user can view a real clipping effect of the clipping template, and determine whether his/her expected effect is achieved. Thus, in the case that his/her own needs are met, the clipping template is utilized. Thus, waste of a computing resource is avoided, wherein the waste is caused by repeatedly generating a multimedia resource, as an effect of a multimedia resource generated directly by using the clipping template is not as expected.

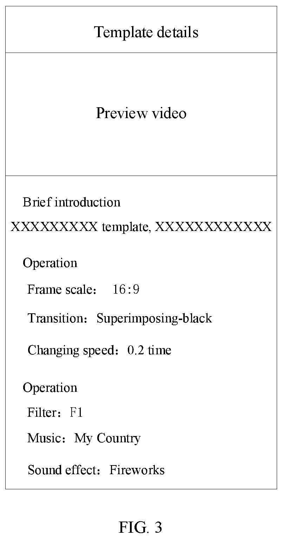

During displaying of the clipping template on the template display interface, the clip operation options are automatically categorized and displayed based on target operation types. For example, as shown in FIG. 3, various clip operations in the clipping template are categorized. The interface may include a video preview region, and a video to be previewed related to the template is displayed in this region. The user can see a schematic diagram of a specific scaled-down frame in the "preview video" region by clicking a button of a frame scale, and similarly, the user can see a schematic diagram of a transition.

In some embodiments, a plurality of operation positions may be defined for the preview operation instruction, and the operation positions correspond to a plurality of template options. In this way, during displaying of the preview content, preview content with superimposed clipping effects is provided based on the template options, such that the user can acquire a more real clipping effect, thereby avoiding repeated operations. In some embodiments, the electronic device displays composite content corresponding to the template options based on template data corresponding to the template options, wherein the composite content includes superimposed content of the template options.

In some embodiments, for the template options corresponding to the operation positions, the superimposed display process may be as follows: The electronic device acquires a plurality of preview content corresponding to the template options based on the template data corresponding to the template options, and displays the composite content acquired by compositing the preview content. By compositing the preview content instead of previewing the content separately, a clipping effect embodying superimposition of a plurality of clipping effects can be exhibited to the user, and is closer to a real clipping effect of the clipping template, such that the above situation of repeated clipping caused by an unexpected clipping result can be avoided, thereby improving the diversity of displaying forms and the practicability of the clipping template.

The clipping template can be shared by a current user to other users. In some embodiments, the electronic device sends the clipping template, in response to a share instruction on the clipping template, to a user account indicated by the share instruction, such that the user's operations are reduced overall, and the practicability of the clipping template is improved.

In the embodiments of the present disclosure, by selecting the clipping information of the target multimedia resource, the clipping information conforming to the target type is selected as the template data, and the clipping template is generated automatically. A corresponding clipping template can be generated based on any target multimedia resource to meet personalized clipping requirements of the user without manual configuration or editing, thereby improving the efficiency of clipping the multimedia resource.

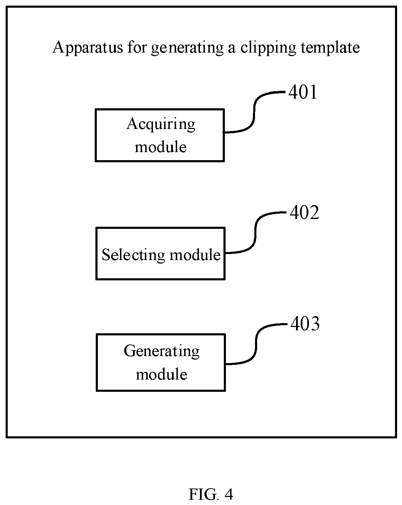

FIG. 4 is block diagram of an apparatus for generating a clipping template according to an exemplary embodiment. Referring to FIG. 4, the apparatus includes: an acquiring module 401, configured to acquire clipping information of a target multimedia resource in response to a template generation request for the target multimedia resource, wherein the clipping information includes at least one of clip operation information or clipping material information for clipping; a selecting module 402, configured to select the clipping information conforming to a target type as template data; anda generating module 403, configured to generate a clipping template based on the template data.

In the apparatus according to the embodiments of the present disclosure, by selecting the clipping information of the target multimedia resource, the clipping information conforming to the target type is selected as the template data, and the clipping template is generated automatically. A corresponding clipping template can be generated based on any target multimedia resource without manual configuration or editing, thus meeting the personalized clipping demand of the user and improving the user's clipping efficiency for the multimedia resource.

In some embodiments, the clipping information of the target multimedia resource at least includes the clip operation information, wherein the clip operation information includes an operation type and operation content of at least one clip operation, and the target type at least includes a predetermined target operation type; andthe selecting module 402 is configured to select clip operation information conforming to the target operation type from the clip operation information as the template data.

In some embodiments, the clip operation information further includes an operation sequence of a plurality of clip operations; and
the selecting module 402 is further configured to correlate clip operation information conforming to the target operation type based on the operation sequenceas the template data.

In some embodiments, the clipping information of the target multimedia resource at least includes the clipping material information for clipping, wherein the clipping material information for clipping includes a material type, material content, or a material acquisition manner of at least one material, and the target type at least includes a predetermined target material type; andthe selecting module 402 is configured to select clipping material information conforming to the target material type from the clipping material information as the template data.

In some embodiments, the template data includes clip operation information conforming to a predetermined target operation type; andthe generating module 403 is configured to generate a corresponding clip operation option based on the clip operation information, and acquire the clipping template including the clip operation option.

In some embodiments, the clip operation information conforming to the predetermined target operation type is further correlated based on an operation sequence of a plurality of clip operations; and the generating module 403 is configured to acquire the clipping template including clip operation options and a trigger sequence of the clip operation options by generating corresponding clip operation options and the trigger sequence based on a correlation relationship of the clip operation information conforming to the predetermined target operation type.

In some embodiments, the template data includes clipping material information conforming to a predetermined target material type; and the generating module 403 is configured to generate a corresponding material option based on the clipping material information, and acquire the clipping template including the material option.

In some embodiments, the generating module 403 is configured to: generate a material acquisition path associated with the corresponding material option based on a material type and a material acquisition manner in the clipping material information; and acquire the clipping template including the material option by adding material content to a directory indicated by the material acquisition path based on material content in the clipping material information.

In some embodiments, the acquiring module 401 is configured to:acquire a clip operation log of the target multimedia resource; andextract clip operation information for clipping the target multimedia resource from the clip operation log, wherein the clip operation information is configured to describe all clip operations for acquiring the target multimedia resource by clipping or a final clip operation result.

In some embodiments, the acquiring module 401 is further configured to extract clipping material information for clipping the target multimedia resource from the clip operation log, wherein the clipping material information at least includes a material type, material content, or a material acquisition manner of at least one material.

In some embodiments, the acquiring module 401 is configured to: acquire an original multimedia resource before the target multimedia resource is clipped; andacquire the clipping information of the target multimedia resource by comparing and analyzing the original multimedia resource and the target multimedia resource.

In some embodiments, the apparatus further includes:a displaying module, configured to provide a template display interface to display the clipping template; and a determining module, configured to determine a template option corresponding to an operation position of a preview operation instruction in response to the preview operation instruction performed onfor the clipping template, wherein the template option at least includes one of a clip operation option or a clipping material option;wherein the displaying module is further configured to display preview content of the template option based on template data corresponding to the template option.

In some embodiments, a plurality of operation positions are defined for the preview operation instruction, and the operation positions correspond to a plurality of template options; and the displaying module is configured to display composite content corresponding to the template options based on template data corresponding to the template options, wherein the composite content includes superimposed content of the template options.

In some embodiments, the displaying module is configured to: acquire a plurality of preview content corresponding to the template options based on the template data corresponding to the template options; and display the composite content acquired by compositing the preview content.

Operations performed by the modules in the apparatus in the above embodiments have been described in detail in the embodiments of the related method, and details are not described herein again.

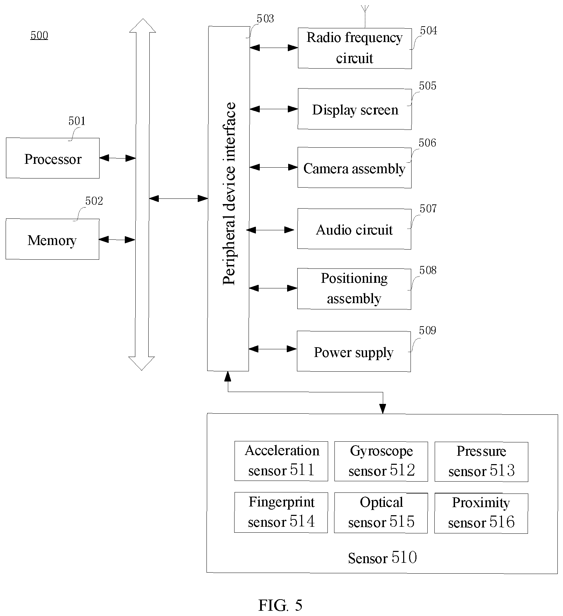

FIG. 5 is a structural block diagram of a terminal according to an exemplary embodiment. The terminal 500 may be a smartphone, a tablet computer, a moving picture experts group audio layer III (MP3) player, a moving picture experts group audio layer IV (MP4) player, a laptop computer, or a desktop computer. The terminal 500 may also be referred to as user equipment, a portable terminal, a laptop terminal, a desktop terminal.

Generally, the terminal 500 includes one or more processors 501 and one or more memories 502.

The processor 501 includes one or more processing cores, such as a quad-core processor and an eight-core processor. The processor 501 may be implemented in at least one of hardware form of a digital signal processor (DSP), a field-programmable gate array (FPGA), and a programmable logic array (PLA). Alternatively, the processor 501 includes a main processor and a coprocessor. The main processor is a processor configured to process data in an awake state, and is also referred to as a central processing unit (CPU). The coprocessor is a low-power-consumption processor configured to process data in a standby state. In some embodiments, the processor 501 is integrated with a graphics processing unit (GPU). The GPU is configured to render and draw content that needs to be displayed by a display screen. In some embodiments, the processor 501 further includes an artificial intelligence (AI) processor. The AI processor is configured to process computational operations related to machine learning.

The memory 502 includes one or more computer readable storage medium, and the computer-readable storage medium may be non-transitory. The memory 502 may further include a high-speed random access memory and a non-volatile memory such as one or more magnetic disk storage devices and flash storage devices. In some embodiments, the non-transitory computer-readable storage medium in the memory 502 is configured to store at least one instruction. The at least one instruction is configured to be executed by the processor 501 to perform the method for generating the clipping template according to the method embodiments of the present disclosure.

In some embodiments, the terminal 500 may further optionally include: a peripheral device interface 503 and at least one peripheral device. The processor 501, the memory 502, and the peripheral device interface 503 are connected by a bus or a signal line. Each peripheral device is connected to the peripheral device interface 503 by a bus, a signal line, or a circuit board. In some embodiments, the peripheral device includes: at least one of a radio frequency circuit 504, a display screen 505, a camera assembly 506, an audio circuit 507, a positioning assembly 508, and a power supply 509.

The peripheral device interface 503 may be configured to connect at least one peripheral device associated with an input/output (I/O) to the processor 501 and the memory 502. In some embodiments, the processor 501, the memory 502, and the peripheral device interface 503 are integrated on the same chip or circuit board. In some other embodiments, any one or two of the processor 501, the memory 502, and the peripheral device interface 503 can be implemented on a separate chip or circuit board, which is not limited in the present embodiment.

The radio frequency circuit 504 is configured to receive and transmit a radio frequency (RF) signal, which is also referred to as an electromagnetic signal. The radio frequency circuit 504 communicates by means of the electromagnetic signal with a communication network and other communication devices. The radio frequency circuit 504 converts an electrical signal to the electromagnetic signal for transmission, or converts the received electromagnetic signal to the electrical signal. In some embodiments, the radio frequency circuit 504 includes: an antenna system, an RF transceiver, one or more amplifiers, a tuner, an oscillator, a digital signal processor, a coding-decoding chip set, a subscriber identity module card, and the like. The radio frequency circuit 504 may communicate with another terminal via at least one wireless communication protocol. The wireless communication protocol includes, but is not limited to, a metropolitan area network, various generations of mobile communication networks (2G, 3G, 4G, and 5G), a wireless local area network, and/or a wireless fidelity (Wi-Fi) network. In some embodiments, the radio frequency circuit 504 may further include a circuit related to near-field communication (NFC), which is not limited in the present disclosure.

The display screen 505 is configured to display a user interface (UI). The UI may include a graph, a text, an icon, a video, and any combination thereof. In the case that the display screen 505 is a touch display screen, the display screen 505 further has a function of acquiring a touch signal on or over the surface of the display screen 505. The touch signal may be input as a control signal to the processor 501 for processing. In this case, the touch display screen 505 is further configured to provide a virtual button and/or a virtual keyboard, which is also referred to as a soft button and/or a soft keyboard. In some embodiments, the display screen 505 is provided as one screen disposed on a front panel of the terminal 500. In some other embodiments, the display screens 505 is provided as at least two screens disposed respectively on different surfaces of the terminal 500 or designed as folded. In other embodiments, the display screen 505 is a flexible display screen disposed on the curved surface or a folded surface of the terminal 500. Furthermore, the display screen 505 may be provided as a non-rectangular pattern, that is, an irregular-shaped screen. The display screen 505 may be a liquid crystal display (LCD) screen, an organic light-emitting diode (OLED) screen, or the like.

The camera assembly 506 is configured to capture an image or a video. In some embodiments, the camera assembly 506 includes a front camera and a rear camera. Generally, the front camera is disposed on a front panel of the terminal, and the rear camera is disposed on a rear surface of the terminal. In some embodiments, there are at least two rear cameras, i.e., a main camera, a depth-of-field camera, a wide-angle camera, and a telephoto camera, to implement a background blur function by combining the main camera and the depth-of-field camera, a panoramic shooting function and a virtual reality (VR) shooting function by combining the main camera and the wide-angle camera, or other fusion shooting functions. In some embodiments, the camera assembly 506 further includes a flashlight. The flashlight is a single-color-temperature flashlight, or a dual-color-temperature flashlight. The dual-color-temperature flashlight is a combination of a warm flashlight and a cold flashlight, and provided light compensation for different color temperatures.

The audio circuit 507 may include a microphone and a speaker. The microphone is configured to acquire sound waves of a user and an environment, convert the sound waves into electrical signals, and input the electrical signals to the processor 501 for processing, or input the electrical signals into the radio frequency circuit 504 to implement voice communication. For the purpose of stereo acquisition or noise reduction, a plurality of microphones is provided and respectively disposed at different parts of the terminal 500. The microphone may be also an array microphone or an omnidirectional acquisition microphone. The speaker is configured to convert electrical signals from the processor 501 or the radio frequency circuit 504 into sound waves. The speaker may be a conventional film speaker or a piezoelectric ceramic speaker. In the case that the speaker is the piezoelectric ceramic speaker, the electrical signal can be converted into not only human-audible sound waves, but also the sound waves that are inaudible to humans for acquire and other purposes. In some embodiments, the audio circuit 507 further includes a headphone jack.

The positioning assembly 508 is configured to determine a current geographic location of the terminal 500 to implement navigation or location based service (LBS). The positioning assembly 508 may the United States' Global Positioning System (GPS), Russia's Global Navigation Satellite System (GLONASS), China's BeiDou Navigation Satellite System (BDS), and the European Union's Galileo Satellite Navigation System (Galileo).

The power supply 509 is configured to supply power for various assemblies in the terminal 500. The power supply 509 may be alternating current, direct current, a disposable battery, or a rechargeable battery. In the case that the power supply 509 includes the rechargeable battery, the rechargeable battery may be charged in a wired mode or a wireless mode. The rechargeable battery may also support the fast-charging technology.

In some embodiments, the terminal 500 further includes one or more sensors 510. The one or more sensors 510 include, but are not limited to, an acceleration sensor 511, a gyroscope sensor 512, a pressure sensor 513, a fingerprint sensor 514, an optical sensor 515, and a proximity sensor 516.

The acceleration sensor 511 is configured to detect magnitude of accelerations on three coordinate axes of a coordinate system established by the terminal 500. For example, the acceleration sensor 511 is configured to detect components of gravitational acceleration on the three coordinate axes. The processor 501 controls the display screen 505 to display a user interface in a lateral view or a vertical view based on gravitational acceleration signals acquired by the acceleration sensor 511. The acceleration sensor 511 may be further configured to acquire motion data of a game or a user.

The gyroscope sensor 512 is configured to detect a body direction and a rotational angle of the terminal 500. The gyroscope sensor 512 may cooperate with the acceleration sensor 511 to acquire the user's 3D actions on the terminal 500. Based on the data acquired by the gyroscope sensor 512, the processor 501 can implement the following functions: motion sensing (such as changing the UI based on a user's tilt operation), image stabilization during shooting, game control and inertial navigation.

The pressure sensor 513 may be disposed on a side frame of the terminal 500 and/or a layer under the display screen 505. In the case that the pressure sensor 513 is disposed on the side frame of the terminal 500, a user's holding signal to the terminal 500 can be detected. The processor 501 performs left/right hand recognition or a quick operation based on the holding signal acquired by the pressure sensor 513. In the case that the pressure sensor 513 is disposed on the layer under the display screen 505, the processor 501 controls an operable control on the UI based on a user's pressure operation on the display screen 505. The operable control includes at least one of a button control, a scroll bar control, an icon control, and a menu control.

The fingerprint sensor 514 is configured to acquire a user's fingerprint. The user's identity is recognized by the processor 501 or by the fingerprint sensor 514 based on the acquired fingerprint by the fingerprint sensor 514. In the case that the user's identity is identified as a trusted identity, the user is authorized by the processor 501 to perform a related sensitive operation, such as unlocking the screen, viewing encrypted information, downloading software, payment, changing settings, and the like. The fingerprint sensor 514 may be disposed on the front, rear, or side surface of the terminal 500. In the case that the terminal 500 is provided with a physical button or its manufacturer's logo, the fingerprint sensor 514 may be integrated with the physical button or the its manufacturer's logo.

The optical sensor 515 is configured to acquire intensity of ambient light. In one embodiment, the processor 501 may control display brightness of the display screen 505 based on the intensity of ambient light acquired by the optical sensor 515. In some embodiments, in the case that the intensity of ambient light is high, the display brightness of the display screen 505 is increased; and in the case that the intensity of ambient light is low, the display brightness of the display screen 505 is decreased. In another embodiment, the processor 501 is further configured to dynamically adjust imaging parameters of the camera assembly 506 based on the intensity of ambient light acquired by the optical sensor 515.

The proximity sensor 516, also referred to as a distance sensor, is generally disposed on the front panel of the terminal 500. The proximity sensor 516 is configured to acquire a distance between a user and the front surface of the terminal 500. In one embodiment, in the case that a distance between the user and the front surface of the terminal 500 detected by the proximity sensor 516 gradually becomes decreases, the display screen 505 is controlled by the processor 501 to switch from a screen-on state to a screen-off state. In the case that the distance between the user and the front surface of the terminal 500 detected by the proximity sensor 516 gradually increases, the display screen 505 is controlled by the processor 501 to switch from the screen-off state to the screen-on state.

It can be understood by those skilled in the art that the structure shown in FIG. 5 does not constitute a limitation to the terminal 500. More or less components than those illustrated may be included, or some components may be combined, or different component arrangements may be provided.

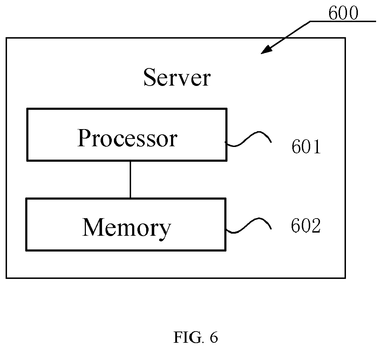

FIG. 6 is a schematic structural diagram of a server according to an exemplary embodiment. Significant differences may be generated when the server 600 has different configurations or performances. The server 600 may include one or more processors (CPU) 601 and one or more memories 602 storing one or more instructions therein, wherein the one or more instructions, when loaded and executed by the one or more processors 601, cause the one or more processors 601 to perform the method for generating the clipping template according to each of the above method embodiments. The server may further include components such as a wired or wireless network interface, a keyboard, and an input/output interface, and other components for input and output. The server may further include other components for implementing device functions, which are not repeated herein.

The servers shown in FIGS. 5 and 6 are both electronic devices. The electronic device includes one or more processors, and one or more memories configured to store one or more instructions executable by the one or more processors, wherein the one or more processors, when loading and executing the one or more instructions, are caused to: acquire clipping information of a target multimedia resource in response to a template generation request for the target multimedia resource, wherein the clipping information includes at least one of clip operation information or clipping material information for clipping; select the clipping information conforming to a target type as template data; and generate a clipping template based on the template data, wherein the clipping template is configured to clip a multimedia resource.

In some embodiments, the clipping information of the target multimedia resource at least includes the clip operation information, wherein the clip operation information includes an operation type and operation content of at least one clip operation, and the target type at least includes a predetermined target operation type; and the one or more processors, when loading and executing the one or more instructions, are caused to: select clip operation information conforming to the target operation type from the clip operation information as the template data.

In some embodiments, the clip operation information further includes an operation sequence of a plurality of clip operations; and the one or more processors, when loading and executing the one or more instructions, are caused to: correlate the clip operation information conforming to the target operation type based on the operation sequence as the template data.

In some embodiments, the clipping information of the target multimedia resource at least includes the clipping material information for clipping, wherein the clipping material information for clipping includes a material type, material content, or a material acquisition manner of at least one material, and the target type at least includes a predetermined target material type; and the one or more processors, when loading and executing the one or more instructions, are caused to: select clipping material information conforming to the target material type from the clipping material information as the template data.

In some embodiments, the template data includes clip operation information conforming to a predetermined target operation type; and the one or more processors, when loading and executing the one or more instructions, are caused to: generate a corresponding clip operation option based on the clip operation information, and acquire the clipping template including the clip operation option.

In some embodiments, the clip operation information conforming to the predetermined target operation type is further correlated based on an operation sequence of a plurality of clip operations; and the one or more processors, when loading and executing the one or more instructions, are caused to: acquire the clipping template including clip operation options and a trigger sequence of the clip operation options by generating corresponding clip operation options and the trigger sequence base on a correlation relationship of the clip operation information conforming to the predetermined target operation type.

In some embodiments, the template data includes clipping material information conforming to a predetermined target material type; and the one or more processors, when loading and executing the one or more instructions, are caused to: generate a corresponding material option based on the clipping material information, and acquire the clipping template including the material option.

In some embodiments, the one or more processors, when loading and executing the one or more instructions, are caused to: generate a material acquisition path associated with the corresponding material option based on a material type and a material acquisition manner in the clipping material information; and acquire the clipping template including the material option by adding material content to a directory indicated by the material acquisition path based on material content in the clipping material information.

In some embodiments, the one or more processors, when loading and executing the one or more instructions, are caused to: acquire a clip operation log of the target multimedia resource; and extract clip operation information for clipping the target multimedia resource from the clip operation log, wherein the clip operation information is configured to describe all clip operations for acquiring the target multimedia resource by clipping or a final clip operation result.

In some embodiments, the one or more processors, when loading and executing the one or more instructions, are further caused to: extract clipping material information for clipping the target multimedia resource from the clip operation log, wherein the clipping material information at least includes a material type, material content, or a material acquisition manner of at least one material.

In some embodiments, the one or more processors, when loading and executing the one or more instructions, are caused to: acquire an original multimedia resource before the target multimedia resource is clipped; and acquire the clipping information of the target multimedia resource by comparing and analyzing the original multimedia resource and the target multimedia resource.

In some embodiments, the one or more processors, when loading and executing the one or more instructions, are further caused to: provide a template display interface to display the clipping template; determine a template option corresponding to an operation position of a preview operation instruction in response to the preview operation instruction performed on the clipping template, wherein the template option at least includes one of a clip operation option or a clipping material option; and display preview content of the template option based on template data corresponding to the template option.

In some embodiments, a plurality of operation positions are defined for the preview operation instruction, and the operation positions correspond to a plurality of template options; and the one or more processors, when loading and executing the one or more instructions, are caused to: display composite content corresponding to the template options based on template data corresponding to the template options, wherein the composite content includes superimposed content of the template options.

In some embodiments, the one or more processors, when loading and executing the one or more instructions, are caused to: acquire a plurality of preview content corresponding to the template options based on the template data corresponding to the template options; and display the composite content acquired by compositing the preview content.

In an exemplary embodiment, a storage medium including one or more instructions is further provided, such as a memory including one or more instructions. The one or more instructions, when loaded and executed by a processor of an apparatus, cause the apparatus to perform the method according to the above method embodiments. In some embodiments, the one or more instructions, when loaded and executed by a processor of an electronic device, cause the electronic device to: acquire clipping information of a target multimedia resource in response to a template generation request for the target multimedia resource, wherein the clipping information includes at least one of clip operation information or clipping material information for clipping; select the clipping information conforming to a target type as template data; and generate a clipping template based on the template data, wherein the clipping template is configured to clip a multimedia resource.

In some embodiments, the clipping information of the target multimedia resource at least includes the clip operation information, wherein the clip operation information includes an operation type and operation content of at least one clip operation, and the target type at least includes a predetermined target operation type; and the one or more instructions, when loaded and executed by the processor of the electronic device, cause the electronic device to: select clip operation information conforming to the target operation type from the clip operation information as the template data.

In some embodiments, the clip operation information further includes an operation sequence of a plurality of clip operations; and the one or more instructions, when loaded and executed by the processor of the electronic device, cause the electronic device to: correlate the clip operation information conforming to the target operation type based on the operation sequence as the template data.

In some embodiments, the clipping information of the target multimedia resource at least includes the clipping material information for clipping, wherein the clipping material information for clipping includes a material type, material content, or a material acquisition manner of at least one material, and the target type at least includes a predetermined target material type; and the one or more instructions, when loaded and executed by the processor of the electronic device, cause the electronic device to: select clipping material information conforming to the target material type from the clipping material information as the template data.

In some embodiments, the template data includes clip operation information conforming to a predetermined target operation type; and the one or more instructions, when loaded and executed by the processor of the electronic device, cause the electronic device to: generate a corresponding clip operation option based on the clip operation information, and acquire the clipping template including the clip operation option.

In some embodiments, the clip operation information conforming to the predetermined target operation type is further correlated based on an operation sequence of a plurality of clip operations; and the one or more instructions, when loaded and executed by the processor of the electronic device, cause the electronic device to: acquire the clipping template including clip operation options and a trigger sequence of the clip operation options by generating corresponding clip operation options and the trigger sequence based on a correlation relationship of the clip operation information conforming to the predetermined target operation type.

In some embodiments, the template data includes clipping material information conforming to a predetermined target material type; and the one or more instructions, when loaded and executed by the processor of the electronic device, cause the electronic device to: generate a corresponding material option based on the clipping material information, and acquire the clipping template including the material option.

In some embodiments, the one or more instructions, when loaded and executed by the processor of the electronic device, cause the electronic device to: generate a material acquisition path associated with the corresponding material option based on a material type and a material acquisition manner in the clipping material information; and acquire the clipping template including the material option by adding material content to a directory indicated by the material acquisition path based on material content in the clipping material information.

In some embodiments, the one or more instructions, when loaded and executed by the processor of the electronic device, cause the electronic device to: acquire a clip operation log of the target multimedia resource; and extract clip operation information for clipping the target multimedia resource from the clip operation log, wherein the clip operation information is configured to describe all clip operations for acquiring the target multimedia resource by clipping or a final clip operation result.

In some embodiments, the one or more instructions, when loaded and executed by the processor of the electronic device, further cause the electronic device to: extract clipping material information for clipping the target multimedia resource from the clip operation log, wherein the clipping material information at least includes a material type, material content, or a material acquisition manner of at least one material.

In some embodiments, the one or more instructions, when loaded and executed by the processor of the electronic device, cause the electronic device to: acquire an original multimedia resource before the target multimedia resource is clipped; and acquire the clipping information of the target multimedia resource by comparing and analyzing the original multimedia resource and the target multimedia resource.

In some embodiments, the one or more instructions, when loaded and executed by the processor of the electronic device, further cause the electronic device to: provide a template display interface to display the clipping template; determine a template option corresponding to an operation position of a preview operation instruction in response to the preview operation instruction performed on the clipping template, wherein the template option at least includes one of a clip operation option or a clipping material option; and display preview content of the template option based on template data corresponding to the template option.

In some embodiments, a plurality of operation positions are defined for the preview operation instruction, and the operation positions correspond to a plurality of template options; and the one or more instructions, when loaded and executed by the processor of the electronic device, cause the electronic device to: display composite content corresponding to the template options based on template data corresponding to the template options, wherein the composite content includes superimposed content of the template options.

In some embodiments, the one or more instructions, when loaded and executed by the processor of the electronic device, cause the electronic device to: acquire a plurality of preview content corresponding to the template options based on the template data corresponding to the template options; and display the composite content acquired by compositing the preview content.

In some embodiments, the storage medium is a non-transitory computer-readable storage medium. For example, the non-transitory computer-readable storage medium is a read-only memory (ROM), a random-access memory (RAM), a compact disc read-only memory (CD-ROM), a magnetic tape, a floppy disk, an optical data storage device, or the like.

In an exemplary embodiment, a computer program product including one or more instructions is further provided, wherein the one or more instructions, when loaded and executed by a processor of an electronic device, cause the electronic device to perform the method for generating the clipping template according to the above embodiments.

A person skilled in the art can easily envisage other solutions of the present disclosure in consideration of the specification and practice of the disclosure herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

## Claims

1. A method for generating a clipping template, wherein the clipping template is configured to clip a multimedia resource, and the method comprises:
acquiring clipping information of a target multimedia resource in response to a template generation request for the target multimedia resource, wherein the clipping information comprises at least one of clip operation information or clipping material information for clipping;
selecting the clipping information conforming to a target type as template data; and
generating the clipping template based on the template data.

2. The method according to claim 1, wherein the clipping information of the target multimedia resource at least comprises the clip operation information, wherein the clip operation information comprises an operation type and operation content of at least one clip operation, and the target type at least comprises a predetermined target operation type; and
said selecting the clipping information conforming to the target type as the template data comprises:
selecting clip operation information conforming to the target operation type from the clip operation information as the template data.

3. The method according to claim 2, wherein the clip operation information further comprises an operation sequence of a plurality of clip operations; and
said selecting the clipping information conforming to the target type as the template data further comprises:
correlating the clip operation information conforming to the target operation type based on the operation sequence as the template data.

4. The method according to claim 1, wherein the clipping information of the target multimedia resource at least comprises the clipping material information for clipping, wherein the clipping material information for clipping comprises a material type, material content, or a material acquisition manner of at least one material, and the target type at least comprises a predetermined target material type; and
said selecting the clipping information conforming to the target type as the template data comprises:
selecting clipping material information conforming to the target material type from the clipping material information as the template data.

5. The method according to claim 1, wherein the template data comprises clip operation information conforming to a predetermined target operation type; and
said generating the clipping template based on the template data comprises:
generating a corresponding clip operation option based on the clip operation information; and
acquiring the clipping template comprising the clip operation option.

6. The method according to claim 5, wherein the clip operation information conforming to the predetermined target operation type is further correlated based on an operation sequence of a plurality of clip operations; and
said generating the clipping template based on the template data comprises:
acquiring the clipping template comprising clip operation options and a trigger sequence of the clip operation options by generating corresponding clip operation options and the trigger sequence based on a correlation relationship of the clip operation information conforming to the predetermined target operation type.

7. The method according to claim 1, wherein the template data comprises clipping material information conforming to a predetermined target material type; and
said generating the clipping template based on the template data comprises:
generating a corresponding material option based on the clipping material information; and
acquiring the clipping template comprising the material option.

8. The method according to claim 7, wherein said generating the corresponding material option based on the clipping material information and acquiring the clipping template comprising the material option comprises:
generating a material acquisition path associated with the corresponding material option based on a material type and a material acquisition manner in the clipping material information; and
acquiring the clipping template comprising the material option by adding material content to a directory indicated by the material acquisition path based on material content in the clipping material information.

9. The method according to claim 1, wherein said acquiring the clipping information of the target multimedia resource comprises:
acquiring a clip operation log of the target multimedia resource; and
extracting clip operation information for clipping the target multimedia resource from the clip operation log, wherein the clip operation information is configured to describe all clip operations for acquiring the target multimedia resource by clipping or a final clip operation result.

10. The method according to claim 9, wherein said acquiring the clipping information of the target multimedia resource further comprises:
extracting clipping material information for clipping the target multimedia resource from the clip operation log, wherein the clipping material information at least comprises a material type, material content, or a material acquisition manner of at least one material.

11. The method according to claim 1, wherein said acquiring the clipping information of the target multimedia resource comprises:
acquiring an original multimedia resource before the target multimedia resource is clipped; and
acquiring the clipping information of the target multimedia resource by comparing and analyzing the original multimedia resource and the target multimedia resource.

12. The method according to claim 1, further comprising:
providing a template display interface to display the clipping template;
determining a template option corresponding to an operation position of a preview operation instruction in response to the preview operation instruction performed on the clipping template, wherein the template option at least comprises one of a clip operation option or a clipping material option; and
displaying preview content of the template option based on template data corresponding to the template option.

13. The method according to claim 12, wherein a plurality of operation positions are defined for the preview operation instruction, and the operation positions correspond to a plurality of template options; and
said displaying the preview content of the template option based on the template data corresponding to the template option comprises:
displaying composite content corresponding to the template options based on template data corresponding to the template options, wherein the composite content comprises superimposed content of the template options.

14. The method according to claim 13, wherein said displaying the composite content corresponding to the template options based on the template data corresponding to the template options comprises:
acquiring a plurality of preview content corresponding to the template options based on the template data corresponding to the template options; and
displaying the composite content acquired by compositing the preview content.

15. An apparatus for generating a clipping template, wherein the clipping template is configured to clip a multimedia resource, and the apparatus comprises:
an acquiring module, configured to acquire clipping information of a target multimedia resource in response to a template generation request for the target multimedia resource, wherein the clipping information comprises at least one of clip operation information or clipping material information for clipping;
a selecting module, configured to select the clipping information conforming to a target type as template data; and
a generating module, configured to generate the clipping template based on the template data.

16. The apparatus according to claim 15, wherein the clipping information of the target multimedia resource at least comprises the clip operation information, wherein the clip operation information comprises an operation type and operation content of at least one clip operation, and the target type at least comprises a predetermined target operation type; and
the selecting module is configured to select clip operation information conforming to the target operation type from the clip operation information as the template data.

17. The apparatus according to claim 16, wherein the clip operation information further comprises an operation sequence of a plurality of clip operations; and
the selecting module is further configured to correlate the clip operation information conforming to the target operation type based on the operation sequence as the template data.

18. The apparatus according to claim 15, wherein the clipping information of the target multimedia resource at least comprises the clipping material information for clipping, wherein the clipping material information for clipping comprises a material type, material content, or a material acquisition manner of at least one material, and the target type at least comprises a predetermined target material type; and
the selecting module is configured to select clipping material information conforming to the target material type from the clipping material information as the template data.

19. The apparatus according to claim 15, wherein the template data comprises clip operation information conforming to a predetermined target operation type; and
the generating module is configured to generate a corresponding clip operation option based on the clip operation information, and acquire the clipping template comprising the clip operation option.

20. The apparatus according to claim 19, wherein the clip operation information conforming to the predetermined target operation type is further correlated based on an operation sequence of a plurality of clip operations; and
the generating module is configured to acquire the clipping template comprising clip operation options and a trigger sequence of the clip operation options by generating corresponding clip operation options and the trigger sequence based on a correlation relationship of the clip operation information conforming to the predetermined target operation type.

21. The apparatus according to claim 15, wherein the template data comprises clipping material information conforming to a predetermined target material type; and
the generating module is configured to generate a corresponding material option based on the clipping material information, and acquire the clipping template comprising the material option.

22. The apparatus according to claim 21, wherein the generating module is configured to:
generate a material acquisition path associated with the corresponding material option based on a material type and a material acquisition manner in the clipping material information; and
acquire the clipping template comprising the material option by adding material content to a directory indicated by the material acquisition path based on material content in the clipping material information.

23. The apparatus according to claim 15, wherein the acquiring module is configured to:
acquire a clip operation log of the target multimedia resource; and
extract clip operation information for clipping the target multimedia resource from the clip operation log, wherein the clip operation information is configured to describe all clip operations for acquiring the target multimedia resource by clipping or a final clip operation result.

24. The apparatus according to claim 23, wherein the acquiring module is further configured to extract clipping material information for clipping the target multimedia resource from the clip operation log, wherein the clipping material information at least comprises a material type, material content, or a material acquisition manner of at least one material.

25. The apparatus according to claim 15, wherein the acquiring module is configured to:
acquire an original multimedia resource before the target multimedia resource is clipped; and
acquire the clipping information of the target multimedia resource by comparing and analyzing the original multimedia resource and the target multimedia resource.

26. The apparatus according to claim 15, further comprising:
a displaying module, configured to provide a template display interface to display the clipping template; and
a determining module, configured to determine a template option corresponding to an operation position of a preview operation instruction in response to the preview operation instruction performed on the clipping template, wherein the template option at least comprises one of a clip operation option or a clipping material option;
wherein the displaying module is further configured to display preview content of the template option based on template data corresponding to the template option.

27. The apparatus according to claim 26, wherein a plurality of operation positions are defined for the preview operation instruction, and the operation positions correspond to a plurality of template options; and
the displaying module is configured to display composite content corresponding to the template options based on template data corresponding to the template options, wherein the composite content comprises superimposed content of the template options.

28. The apparatus according to claim 27, wherein the displaying module is configured to:
acquire a plurality of preview content corresponding to the template options based on the template data corresponding to the template options; and
display the composite content acquired by compositing the preview content.

29. An electronic device, comprising:
one or more processors; and
one or more memories configured to store one or more instructions executable by the one or more processors;
wherein the one or more processors, when loading and executing the one or more instructions, are caused to:
acquire clipping information of a target multimedia resource in response to a template generation request for the target multimedia resource, wherein the clipping information comprises at least one of clip operation information or clipping material information for clipping;
select the clipping information conforming to a target type as template data; and
generate a clipping template based on the template data, wherein the clipping template is configured to clip a multimedia resource.

30. The electronic device according to claim 29, wherein the clipping information of the target multimedia resource at least comprises the clip operation information, wherein the clip operation information comprises an operation type and operation content of at least one clip operation, and the target type at least comprises a predetermined target operation type; and
the one or more processors, when loading and executing the one or more instructions, are caused to:
select clip operation information conforming to the target operation type from the clip operation information as the template data.

31. The electronic device according to claim 30, wherein the clip operation information further comprises an operation sequence of a plurality of clip operations; and
the one or more processors, when loading and executing the one or more instructions, are caused to:
correlate the clip operation information conforming to the target operation type based on the operation sequence as the template data.

32. The electronic device according to claim 29, wherein the clipping information of the target multimedia resource at least comprises the clipping material information for clipping, wherein the clipping material information for clipping comprises a material type, material content, or a material acquisition manner of at least one material, and the target type at least comprises a predetermined target material type; and
the one or more processors, when loading and executing the one or more instructions, are caused to:
select clipping material information conforming to the target material type from the clipping material information as the template data.

33. The electronic device according to claim 29, wherein the template data comprises clip operation information conforming to a predetermined target operation type; and
the one or more processors, when loading and executing the one or more instructions, are caused to:
generate a corresponding clip operation option based on the clip operation information; and
acquire the clipping template comprising the clip operation option.

34. The electronic device according to claim 33, wherein the clip operation information conforming to the predetermined target operation type is further correlated based on an operation sequence of a plurality of clip operations; and
the one or more processors, when loading and executing the one or more instructions, are caused to:
acquire the clipping template comprising clip operation options and a trigger sequence of the clip operation options by generating corresponding clip operation options and the trigger sequence based on a correlation relationship of the clip operation information conforming to the predetermined target operation type.

35. The electronic device according to claim 29, wherein the template data comprises clipping material information conforming to a predetermined target material type; and
the one or more processors, when loading and executing the one or more instructions, are caused to:
generate a corresponding material option based on the clipping material information; and
acquire the clipping template comprising the material option.

36. The electronic device according to claim 35, wherein the one or more processors, when loading and executing the one or more instructions, are caused to:
generate a material acquisition path associated with the corresponding material option based on a material type and a material acquisition manner in the clipping material information; and
acquire the clipping template comprising the material option by adding material content to a directory indicated by the material acquisition path based on material content in the clipping material information.

37. The electronic device according to claim 29, wherein the one or more processors, when loading and executing the one or more instructions, are caused to:
acquire a clip operation log of the target multimedia resource; and
extract clip operation information for clipping the target multimedia resource from the clip operation log, wherein the clip operation information is configured to describe all clip operations for acquiring the target multimedia resource by clipping or a final clip operation result.

38. The electronic device according to claim 37, wherein the one or more processors, when loading and executing the one or more instructions, are further caused to:
extract clipping material information for clipping the target multimedia resource from the clip operation log, wherein the clipping material information at least comprises a material type, material content, or a material acquisition manner of at least one material.

39. The electronic device according to claim 29, wherein the one or more processors, when loading and executing the one or more instructions, are caused to:
acquire an original multimedia resource before the target multimedia resource is clipped; and
acquire the clipping information of the target multimedia resource by comparing and analyzing the original multimedia resource and the target multimedia resource.

40. The electronic device according to claim 29, wherein the one or more processors, when loading and executing the one or more instructions, are further caused to:
provide a template display interface to display the clipping template;
determine a template option corresponding to an operation position of a preview operation instruction in response to the preview operation instruction performed on the clipping template, wherein the template option at least comprises one of a clip operation option or a clipping material option; and
display preview content of the template option based on template data corresponding to the template option.

41. The electronic device according to claim 40, wherein a plurality of operation positions are defined for the preview operation instruction, and the operation positions correspond to a plurality of template options; and
the one or more processors, when loading and executing the one or more instructions, are caused to:
display composite content corresponding to the template options based on template data corresponding to the template options, wherein the composite content comprises superimposed content of the template options.

42. The electronic device according to claim 41, wherein the one or more processors, when loading and executing the one or more instructions, are caused to:
acquire a plurality of preview content corresponding to the template options based on the template data corresponding to the template options; and
display the composite content acquired by compositing the preview content.

43. A storage medium storing one or more instructions therein, wherein the one or more instructions, when loaded and executed by a processor of an electronic device, cause the electronic device to:
acquire clipping information of a target multimedia resource in response to a template generation request for the target multimedia resource, wherein the clipping information comprises at least one of clip operation information or clipping material information for clipping;
select the clipping information conforming to a target type as template data; and
generate a clipping template based on the template data, wherein the clipping template is configured to clip a multimedia resource.
acquire clipping information of a target multimedia resource in response to a template generation request for the target multimedia resource, wherein the clipping information comprises at least one of clip operation information or clipping material information for clipping;
select the clipping information conforming to a target type as template data; and
generate a clipping template based on the template data, wherein the clipping template is configured to clip a multimedia resource.

44. The storage medium according to claim 43, wherein the clipping information of the target multimedia resource at least comprises the clip operation information, wherein the clip operation information comprises an operation type and operation content of at least one clip operation, and the target type at least comprises a predetermined target operation type; and
the one or more instructions, when loaded and executed by the processor of the electronic device, cause the electronic device to:
select clip operation information conforming to the target operation type from the clip operation information as the template data.

45. The storage medium according to claim 44, wherein the clip operation information further comprises an operation sequence of a plurality of clip operations; and
the one or more instructions, when loaded and executed by the processor of the electronic device, further cause the electronic device to:
correlate the clip operation information conforming to the target operation type based on the operation sequence as the template data.

46. The storage medium according to claim 43, wherein the clipping information of the target multimedia resource at least comprises the clipping material information for clipping, wherein the clipping material information for clipping comprises a material type, material content, or a material acquisition manner of at least one material, and the target type at least comprises a predetermined target material type; and
the one or more instructions, when loaded and executed by the processor of the electronic device, cause the electronic device to:
select clipping material information conforming to the target material type from the clipping material information as the template data.

47. The storage medium according to claim 43, wherein the template data comprises clip operation information conforming to a predetermined target operation type; and
the one or more instructions, when loaded and executed by the processor of the electronic device, cause the electronic device to:
generate a corresponding clip operation option based on the clip operation information; and
acquire the clipping template comprising the clip operation option.

48. The storage medium according to claim 47, wherein the clip operation information conforming to the predetermined target operation type is further correlated based on an operation sequence of a plurality of clip operations; and
the one or more instructions, when loaded and executed by the processor of the electronic device, cause the electronic device to:
acquire the clipping template comprising clip operation options and a trigger sequence of the clip operation options by generating corresponding clip operation options and the trigger sequence based on a correlation relationship of the clip operation information conforming to the predetermined target operation type.

49. The storage medium according to claim 43, wherein the template data comprises clipping material information conforming to a predetermined target material type; and
the one or more instructions, when loaded and executed by the processor of the electronic device, cause the electronic device to:
generate a corresponding material option based on the clipping material information; and
acquire the clipping template comprising the material option.

50. The storage medium according to claim 49, wherein the one or more instructions, when loaded and executed by the processor of the electronic device, cause the electronic device to:
generate a material acquisition path associated with the corresponding material option based on a material type and a material acquisition manner in the clipping material information; and
acquire the clipping template comprising the material option by adding material content to a directory indicated by the material acquisition path based on material content in the clipping material information.

51. The storage medium according to claim 43, wherein the one or more instructions, when loaded and executed by the processor of the electronic device, cause the electronic device to:
acquire a clip operation log of the target multimedia resource; and
extract clip operation information for clipping the target multimedia resource from the clip operation log, wherein the clip operation information is configured to describe all clip operations for acquiring the target multimedia resource by clipping or a final clip operation result.

52. The storage medium according to claim 51, wherein the one or more instructions, when loaded and executed by the processor of the electronic device, further cause the electronic device to:
extract clipping material information for clipping the target multimedia resource from the clip operation log, wherein the clipping material information at least comprises a material type, material content, or a material acquisition manner of at least one material.

53. The storage medium according to claim 43, wherein the one or more instructions, when loaded and executed by the processor of the electronic device, cause the electronic device to:
acquire an original multimedia resource before the target multimedia resource is clipped; and
acquire the clipping information of the target multimedia resource by comparing and analyzing the original multimedia resource and the target multimedia resource.

54. The storage medium according to claim 43, wherein the one or more instructions, when loaded and executed by the processor of the electronic device, further cause the electronic device to:
provide a template display interface to display the clipping template;
determine a template option corresponding to an operation position of a preview operation instruction in response to the preview operation instruction performed on the clipping template, wherein the template option at least comprises one of a clip operation option or a clipping material option; and
display preview content of the template option based on template data corresponding to the template option.

55. The storage medium according to claim 54, wherein a plurality of operation positions are defined for the preview operation instruction, and the operation positions correspond to a plurality of template options; and
the one or more instructions, when loaded and executed by the processor of the electronic device, cause the electronic device to:
display composite content corresponding to the template options based on template data corresponding to the template options, wherein the composite content comprises superimposed content of the template options.

56. The storage medium according to claim 55, wherein the one or more instructions, when loaded and executed by the processor of the electronic device, cause the electronic device to:
acquire a plurality of preview content corresponding to the template options based on the template data corresponding to the template options; and
display the composite content acquired by compositing the preview content.
